# EUROPEAN PATENT APPLICATION

(11) **EP 4 752 991 A1**
(43) Date of publication of application: **03.06.2026**
(21) Application number: 24862015.5
(22) Date of filing: 05.09.2024
(51) Int. Cl.: H01M 8/04014, H01M 8/12, H01M 8/2425, H01M 8/2475, H01M 8/249

(54) **ELECTROCHEMICAL ENERGY CONVERSION APPARATUS AND POWER GENERATION APPARATUS COMPRISING SAME**

(30) Priority: 06.09.2023 CN 202311147870
(71) Applicant: Chaozhou Three-Circle (Group) Co., Ltd., Chaozhou, Guangdong 515646 (CN); SHENZHEN THREE-CIRCLE TECHNOLOGY CO., LTD., Guangdong 518000 (CN)
(72) Inventor: CHEN, Shuoshuo, Chaozhou, Guangdong 515646 (CN); FAN, Liandong, Chaozhou, Guangdong 515646 (CN)
(74) Representative: Metida
(86) International application number: PCT/CN2024/117025
(87) International publication number: WO 2025/051175

(57) **Abstract**

The present disclosure relates to the field of electrochemistry, and provides an electrochemical energy conversion apparatus and a power generation apparatus including the same. The electrochemical energy conversion apparatus includes a temperature equalization housing, a stack assembly, an insulating component, a second fluid inlet pipe, and a second fluid outlet pipe. Since a first fluid required for an electrochemical energy conversion reaction does not need to be inputted and discharged through the first fluid channel, the overall structure of the electrochemical energy conversion apparatus is simplified, and the stack is maintained, disassembled, and assembled more conveniently. Furthermore, due to the presence of the temperature equalization housing, the discharged first fluid can fully contact a main body of the temperature equalization housing, and conduct heat to a first cavity through the main body, thereby achieving a desirable temperature equalization effect on the first fluid in the electrochemical energy conversion apparatus. This ensures that the temperature of the first fluid entering the temperature equalization housing is similar or identical to the temperature of the first fluid discharged from the temperature equalization housing after the reaction, thereby reducing a temperature difference between the first cavity and a second cavity, and inhibiting the stack performance degradation and damage to the stack caused by local thermal expansion.

## Description

### TECHNICAL FIELD

The present disclosure relates to the technical field of electrochemistry, and in particular to an electrochemical energy conversion apparatus and a power generation apparatus including the electrochemical energy conversion apparatus.

### BACKGROUND

The interconversion between electrical energy and chemical energy is achieved through a variety of electrochemical energy conversion apparatuses, such as fuel cells and electrolyzers. Common fuel cells include alkaline fuel cells (AFCs), phosphoric acid fuel cells (PAFCs), molten carbonate fuel cells (MCFCs), proton exchange membrane fuel cells (PEMFCs), direct methanol fuel cells (DMFCs), and solid oxide fuel cells (SOFCs). Common electrolyzers include alkaline water electrolyzers (AWEs), proton exchange membrane water electrolyzers (PEMWEs), anion exchange membrane water electrolyzers (AEMWEs), and solid oxide electrolyzer cells (SOECs).

The SOFCs and the SOECs can be collectively referred to as solid oxide cells (SOCs). The SOCs are advanced electrochemical energy storage and conversion apparatuses with broad application prospects in clean energy power generation and CO₂ conversion. The SOFCs are energy conversion apparatuses that can directly convert chemical energy stored in fuels and oxidants into electrical energy. They have a relatively high operating temperature, typically in the range of 700-1,000 °C. Therefore, their waste heat can be utilized to achieve combined heat and power (CHP) during power generation and the energy utilization efficiency can be up to 90%. The SOECs are electrochemical energy conversion apparatuses that convert electrical energy and thermal energy into chemical energy, and their reactions are the reverse reactions of the SOFCs. As one of the main technical routes for water electrolysis hydrogen production today, SOECs typically operate at 700-850°C, with the electrolysis efficiency of up to 85-95%.

Existing electrochemical energy conversion apparatuses usually include multiple stacks in a specific arrangement. However, for the stacks in such apparatuses, gas is typically supplied and discharged through gas pipelines. The overall pipeline structure is complex, which is not conducive to maintenance and replacement of the stacks. Moreover, there is a temperature difference between the supplied gas and the discharged gas, causing non-uniform distribution of internal temperatures. The resulting local thermal expansion leads to rapid performance degradation of the stacks, or even causes damage to the stacks.

### SUMMARY

An objective of the present disclosure is to provide an electrochemical energy conversion apparatus.

To achieve the above objective, in a first aspect, the present disclosure provides an electrochemical energy conversion apparatus, including:
a temperature equalization housing, inside which an accommodation cavity is formed, wherein the temperature equalization housing is made of a thermally conductive material, and the temperature equalization housing is provided with a first fluid inlet and a first fluid outlet;
a stack assembly including at least one stack and disposed in the accommodation cavity, wherein the at least one stack is provided with a first fluid channel; and
an insulating component disposed between the stack assembly and the temperature equalization housing,
wherein the stack assembly and the insulating component together devide the accommodation cavity into a plurality of cavities; the plurality of cavities include a first cavity and a second cavity; the first cavity is in communication with the first fluid inlet; the second cavity is in communication with the first fluid outlet; and the first cavity is in communication with the second cavity via the first fluid channel.

In some embodiments of the present disclosure, a thermal conductivity of the temperature equalization housing is 1-40 W/(m·K).

In some embodiments of the present disclosure, the temperature equalization housing is made of one or more materials selected from the group consisting of SUS 310S, SUS 310, SUS 444, SUS 430, and SUS 316.

In some embodiments of the present disclosure, a thermal conductivity of the insulating component is 1-30 W/(m·K).

In some embodiments of the present disclosure, the temperature equalization housing includes a plurality of wall surfaces enclosing the accommodation cavity, and an area of a wall surface provided with the first fluid inlet is denoted as B, a cross-sectional area of the first fluid inlet is denoted as A, and A/B = 0.01-0.95.

In some embodiments of the present disclosure, a distance between a bottom surface of the stack assembly and an inner bottom surface of the temperature equalization housing is denoted as C, a distance between a top surface of the stack assembly and an inner top surface of the temperature equalization housing is denoted as D, a distance between a side surface of the stack assembly and a corresponding inner side surface of the temperature equalization housing is denoted as E, a thickness of the insulating component is denoted as F, and C/F=1-4, D/F=1-4, E/F=1-2.

It is to be understood that the side surface of the stack does not face the first cavity or the second cavity, and the stack has a main surface facing the first cavity or the second cavity, and an outlet and an inlet of the first fluid channel are located on the main surface.

In some embodiments of the present disclosure, the electrochemical energy conversion apparatus further includes a sealing gasket, and the sealing gasket is disposed between the insulating component and the temperature equalization housing.

In some embodiments of the present disclosure, the temperature equalization housing is provided with a second fluid inlet and a second fluid outlet;
the electrochemical energy conversion apparatus further includes a second fluid inlet pipe and a second fluid outlet pipe;
the second fluid inlet pipe is disposed in the first cavity, the second fluid inlet pipe is connected to the temperature equalization housing through the second fluid inlet, and the second fluid inlet pipe is connected to the stack assembly; and
the second fluid outlet pipe is disposed in the second cavity, the second fluid outlet pipe is connected to the temperature equalization housing through the second fluid outlet, and the second fluid outlet pipe is connected to the stack assembly.

In some embodiments of the present disclosure, the temperature equalization housing includes an end surface, a projection plane of the first cavity onto the end surface is denoted as N₁, a long side of the projection plane N₁ is denoted as L₁, a short side of the projection plane N₁ is denoted as W₁, a projection point of an axis of the second fluid inlet pipe onto the end surface is denoted as O₁, a distance between the projection point O₁ and the long side L₁ of the projection plane N₁ close to the stack assembly is denoted as X₁, and 0.1W₁ ≤ X₁ ≤ 0.9W₁;
and/or,
the temperature equalization housing includes the end surface, a projection plane of the second cavity onto the end surface is denoted as N₂, a long side of the projection plane N₂ is denoted as L₂, a short side of the projection plane N₂ is denoted as W₂, a projection point of an axis of the second fluid outlet pipe on the end surface is denoted as O₂, a distance between the projection point O₂ and the long side L₂ of the projection plane N₂ close to the stack assembly is denoted as X₂, and 0.1W₂ ≤ X₂ ≤ 0.9W₂.

In some embodiments of the present disclosure, the temperature equalization housing includes an end surface, a projection plane of the first cavity onto the end surface is denoted as N₁, a short side of the projection plane N₁ is denoted as W₁, a length of a longest diagonal of the projection plane N₁ is denoted as Z₁, a projection point of an axis of the second fluid inlet pipe onto the end surface is denoted as O₁, a projection point of a center point of the first fluid inlet onto the end surface is denoted as P₁, a distance between the projection point P₁ and the projection point O₁ is denoted as Y₁, and 0.1 W₁≤Y₁≤0.85Z₁;
and/or,
the temperature equalization housing includes the end surface, a projection plane of the second cavity onto the end surface is denoted as N₂, a short side of the projection plane N₂ is denoted as W₂, a length of a longest diagonal of the projection plane N₂ is denoted as Z₂, a projection point of an axis of the second fluid outlet pipe on the end surface is denoted as O₂, a projection point of a center point of the first fluid outlet on the end surface is denoted as P₂, a distance between the projection point P₂ and the projection point O₂ is denoted as Y₂, and 0.1W₂≤Y₂≤0.85Z₂.

In some embodiments of the present disclosure, the stack assembly includes a plurality of stacks, at least two adjacent stacks are connected in series, positive and negative terminals of the two adjacent stacks that are connected in series are arranged in opposite directions, and the insulating component is disposed between the two adjacent stacks.

It is to be noted that no cavity is formed between two adjacent stacks in the same row of stack assemblies, while a cavity is formed between two adjacent rows of stack assemblies.

In some embodiments of the present disclosure, the second fluid inlet pipe and the second fluid outlet pipe are each provided with an insulating segment.

In some embodiments of the present disclosure, the electrochemical energy conversion apparatus further includes a current-collecting assembly, the current-collecting assembly includes a conductive part and an electrical connection part, the conductive part is disposed between the insulating component and the stack assembly and electrically connected to the stack assembly, and the electrical connection part passes through the temperature equalization housing and the insulating component and is connected to the conductive part.

The electrochemical energy conversion apparatus provided by the present disclosure has the following beneficial effects over the prior art:
The electrochemical energy conversion apparatus provided by the present disclosure includes the temperature equalization housing, the stack assembly including at least one stack, and the insulating component. The temperature equalization housing, the stack assembly, and the insulating component cooperate with one another to form multiple cavities inside the temperature equalization housing, including the first cavity and the second cavity. A first fluid required for a reaction in the electrochemical energy conversion apparatus enters the first cavity through the first fluid inlet, then flows into the first fluid channel, and enters each single cell in the stack for reaction. A cathode tail gas during the reaction flows into the second cavity through the first fluid channel, and is then discharged through the first fluid outlet. That is, the first fluid required for the reaction in the electrochemical energy conversion apparatus does not need to be supplied and discharged through a first fluid pipe, such that the overall structure of the electrochemical energy conversion apparatus is simplified, and the stack is maintained, disassembled, and assembled more conveniently. Besides, the temperature equalization housing seals the entire electrochemical energy conversion apparatus, creating a desirable sealed environment to prevent leakage of the first fluid or the second fluid. A temperature of the first fluid discharged from the stack is higher than a temperature of the supplied first fluid. Due to the temperature equalization housing, the discharged first fluid can fully contact a main body of the temperature equalization housing, and conduct heat to the first cavity through the main body, thereby achieving a desirable temperature equalization effect on the first fluid inside the electrochemical energy conversion apparatus. This ensures that the temperature of the first fluid entering the temperature equalization housing is close to or the same as the temperature of the first fluid discharged from the temperature equalization housing after the reaction, thereby reducing the temperature difference between the first cavity and the second cavity, and inhibiting the performance degradation and damage to the stack caused by local thermal expansion.

### BRIEF DESCRIPTION OF THE DRAWINGS

FIG. 1 is a schematic view showing an overall structure of an electrochemical energy conversion apparatus according to an embodiment of the present disclosure;
FIG. 2 is a schematic structural view of an electrochemical energy conversion apparatus according to an embodiment of the present disclosure;
FIG. 3 is a schematic bottom view of an electrochemical energy conversion apparatus according to an embodiment of the present disclosure;
FIG. 4 is a schematic top view of an electrochemical energy conversion apparatus according to an embodiment of the present disclosure;
FIG. 5 is a schematic cross-sectional view taken along a line X-X shown in FIG. 4;
FIG. 6 is a schematic structural view of an electrochemical energy conversion apparatus (with part of a temperature equalization housing omitted) according to an embodiment of the present disclosure;
FIG. 7 is a schematic front view of an electrochemical energy conversion apparatus (with part of a temperature equalization housing omitted) according to an embodiment of the present disclosure;
FIG. 8 is a schematic cross-sectional view taken along a line Y-Y shown in FIG. 7; and
FIG. 9 is a schematic cross-sectional view taken along a line Z-Z shown in FIG. 7.

In the figures: 1: temperature equalization housing, 11: first fluid inlet, 12: first fluid outlet, 13: first cavity, 14: second cavity, 15: end surface, 16: second fluid inlet, 17: second fluid outlet, 200: stack assembly, 20: stack, 2: stack unit, 21: stack unit top plate, 22: a plurality of single cells, 23: stack unit bottom plate, 3: insulating component, 4: sealing gasket, 5: second fluid inlet pipe, 6: second fluid outlet pipe, 61: fluid equalization device, 71: conductive part, and 72: electrical connection part.

### DETAILED DESCRIPTION

The technical solutions in the embodiments of the present disclosure are clearly and completely described below with reference to the accompanying drawings in the embodiments of the present disclosure. Obviously, the described embodiments are merely some, rather than all the embodiments of the present disclosure. All other embodiments obtained by those of ordinary skill in the art based on the embodiments of the present disclosure without creative efforts shall fall within the protection scope of the present disclosure.

In the description of the present disclosure, it is to be understood that the orientation or positional relationships indicated by terms, such as "center", "up", "down", "front", "rear", "left", "right", "vertical", "horizontal", "top", "bottom", "inside", and "outside", are based on the orientation or positional relationship shown in the accompanying drawings, are merely for facilitating the description of the present disclosure and simplifying the description, rather than indicating or implying that an apparatus or element referred to must have a particular orientation or be constructed and operated in a particular orientation, and therefore shall not be interpreted as limiting the present disclosure. The terms such as "first" and "second" are used only for descriptive purposes, and should not be construed as indicating or implying relative importance or implying the number of indicated technical features. That is, the feature limited by "first" and "second" may explicitly or implicitly include one or more such features. In addition, unless otherwise specified, "a plurality of" or "multiple" means two or more.

In addition, in the description of the present disclosure, unless otherwise clearly specified and limited, meanings of terms "mount", "connected", and "connection" should be understood in a broad sense. For example, the connection may be a fixed connection, a removable connection, or an integral connection; may be a mechanical connection or an electrical connection; may be a direct connection or an indirect connection by using an intermediate medium, or may be intercommunication between two elements. Those of ordinary skill in the art may understand the specific meanings of the above terms in the present disclosure based on specific situations.

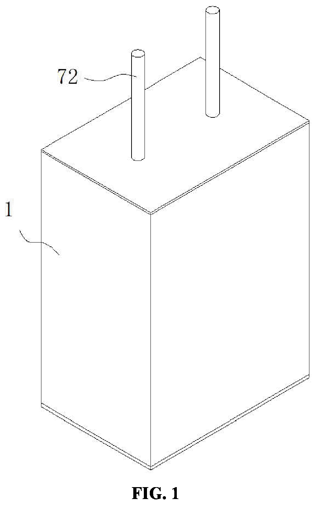

As shown in FIG. 1, FIG. 6, and FIG. 7, an embodiment of the present disclosure provides an electrochemical energy conversion apparatus, including a temperature equalization housing 1, a stack assembly 200, and an insulating component 3.

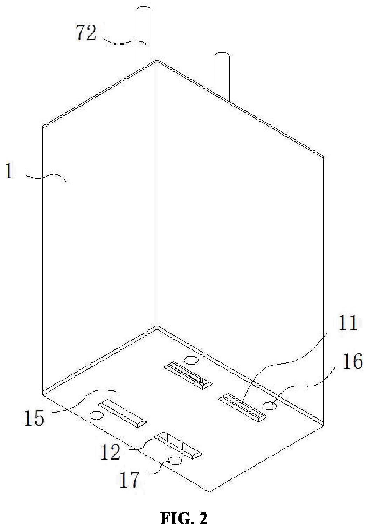

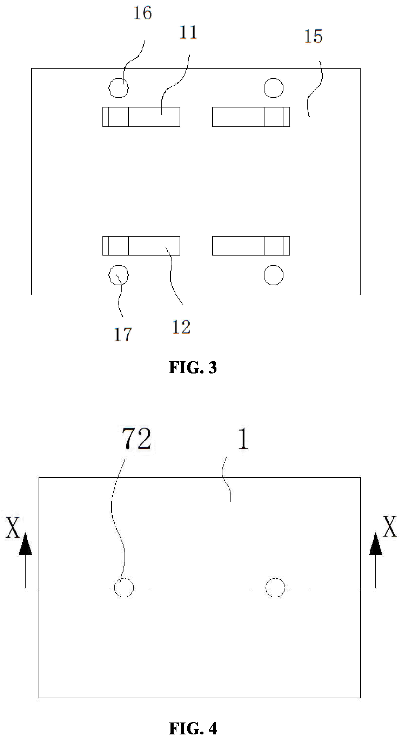

Referring to FIG. 2 and FIG. 3, an accommodation cavity is formed inside the temperature equalization housing 1. The temperature equalization housing 1 is made of a thermally conductive material. The temperature equalization housing 1 is provided with a first fluid inlet 11 and a first fluid outlet 12. Preferably, the first fluid inlet 11 and the first fluid outlet 12 are disposed on a same end surface 15 of the temperature equalization housing 1. Alternatively, the first fluid inlet 11 and the first fluid outlet 12 may be disposed on different end surfaces 15, or disposed on a side surface of the temperature equalization housing 1. Preferably, the temperature equalization housing 1 is made of one or more stainless steel materials selected from the group consisting of SUS 310S, SUS 310, SUS 444, SUS 430, and SUS 316.

To achieve a better temperature equalization effect of the temperature equalization housing 1, optionally, in this embodiment, a thermal conductivity of the temperature equalization housing 1 is 1-40 W/(m·K). During power generation, if the thermal conductivity of the temperature equalization housing 1 is less than 1 W/(m·K), heat near the first fluid outlet 12 of the temperature equalization housing 1 cannot be promptly transferred to the first fluid inlet 11 of the temperature equalization housing 1, such that a temperature difference between an inlet and an outlet of the temperature equalization housing 1, as well as between an inlet and an outlet of a stack unit 2, is increased, thereby reducing the service life of the stack unit 2. During power generation, if the thermal conductivity of the temperature equalization housing 1 is greater than 40 W/(m·k), heat from the electrochemical energy conversion apparatus would be excessively released to the surrounding environment. At this time, more heat is required to maintain operation of the electrochemical energy conversion apparatus, thereby increasing energy consumption of the entire electrochemical energy conversion apparatus. Furthermore, if multiple electrochemical energy conversion apparatuses are compactly connected, temperature fields of adjacent electrochemical energy conversion apparatuses will interfere with each other, increasing a risk of abnormal operation of the electrochemical energy conversion apparatuses.

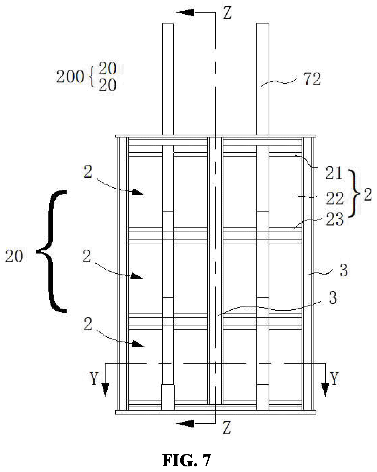

Referring to FIG. 7, the stack assembly 200 is disposed in the accommodation cavity. The stack assembly 200 includes two stacks 20 arranged in alignment. The two stacks 20 each are provided with a first fluid channel (not shown) that is configured to allow a first fluid to flow through. Multiple stack units 2 are stacked vertically to form the stack 20. The stack 20 may also be formed by a single stack unit 2. Specifically, each stack unit 2 includes a stack unit bottom plate 23, a plurality of single cells 22, and a stack unit top plate 21. The plurality of single cells 22 are arranged between the stack unit bottom plate 23 and the stack unit top plate 21, and connected to the both. The stack unit bottom plate 23 and the stack unit top plate 21 facilitate positioning during assembly of the electrochemical energy conversion system, and can further protect the overall structure of the stack units 2. In addition, a gas guiding hole may be formed on the stack unit bottom plate 23 or the stack unit top plate 21 to facilitate the passage of a second fluid for a reaction.

It is to be understood that the SOFCs use air as the first fluid, and fuel gas as the second fluid, and the SOECs use air as the first fluid, and water vapor as the second fluid. In the SOECs, the air is introduced to provide a certain oxygen partial pressure at the start of the reaction, and to reduce the oxygen partial pressure in the electrochemical energy conversion apparatus during the reaction, thereby facilitating the smooth progression of the reaction, and lowering the temperature during the reaction in the electrochemical energy conversion apparatus.

Optionally, referring to FIG. 7, in this embodiment, the stack unit bottom plate 23, the stack unit top plate 21, and the temperature equalization housing 1 are made of a same material. The electrochemical energy conversion apparatus typically operates at a working temperature of 800-1,000 °C, at which metals will undergo thermal expansion. If the temperature equalization housing 1 is made of a material different from the stack unit top plate 21, the stack unit bottom plate 23, connecting component, and the like, there will be a mismatch in thermal expansion. Specifically, if expansion coefficients of the stack unit top plate 21, the stack unit bottom plate 23 and the connecting component are greater than an expansion coefficient of the temperature equalization housing 1, the stack 20 will push against the temperature equalization housing 1, leading to deformation of the temperature equalization housing 1. If the expansion coefficients of the stack unit top plate 21, the stack unit bottom plate 23 and the connecting component are less than the expansion coefficient of the temperature equalization housing 1, a gap between the temperature equalization housing 1 and the stack will gradually increase as the temperature rises, and the sealing structure between them will fail as a result. Consequently, more reaction gas does not flow through the stack 20 and directly flows toward a reaction gas outlet. In severe cases, the stack 20 will be damaged due to insufficient reaction gas supply.

Optionally, in this embodiment, there are a plurality of stack assemblies 200, and each stack assembly 200 includes at least two stacks 20. Two adjacent stacks 20 are connected in series. Positive and negative terminals of the two adjacent stacks 20 that are connected in series are disposed in opposite directions, such that positive terminal leads and negative terminal leads of the stacks 20 can be located on a same side, simplifying the design of the electrochemical energy conversion apparatus, and facilitating the subsequent testing and system assembly. Specifically, the at least two stacks 20 may be electrically connected in series through a conductive plate or a conductive wire, and the conductive plate is preferred. Since the SOCs have a high operating temperature, and the positive terminal and the negative terminal of the packs are located in a high-temperature region, if two stacks 20 are electrically connected with a conductive wire, the conductive wire is prone to oxidation, fracture and other failure behaviors at the high temperature. Therefore, preferably, the two stacks 20 are preferably electrically connected with the conductive plate.

Optionally, referring to FIG. 7, in this embodiment, the insulating component 3 is disposed between two adjacent stacks 20. Two adjacent stacks in the electrochemical energy conversion apparatus are relatively close to each other. If no insulating component 3 is disposed between the two adjacent stacks, failures such as short circuits due to electrical breakdown are likely to occur. Additionally, the insulating component 3 is also an essential component for forming the first cavity 13 and the second cavity 14 within the temperature equalization housing 1. Otherwise, the first fluid can directly flow between two stacks 20, resulting in no reaction or extremely low reaction efficiency in the stacks.

It is to be understood that the number of cavities in the electrochemical energy conversion apparatus is associated with the number of rows of stack assemblies. For example, when the stack assembly in the electrochemical energy conversion apparatus consists of two stacks 20 located in one row, and the two stacks 20 are electrically connected in series with the positive and negative terminals oriented in opposite directions, there are one first cavity 13 and one second cavity 14 in the electrochemical energy conversion apparatus. The first fluid required for the electrochemical energy conversion reaction enters the first cavity 13 through the first fluid inlet 11 on the temperature equalization housing 1, flows into first fluid channels of the two stacks 20, and enters each single cell in the two stacks 20 for reaction. Cathode tail gas during the reaction flows into the second cavity 14 through the first fluid channels of the two stacks 20, and is then discharged from the electrochemical energy conversion apparatus through the first fluid outlet 12. When the stack assembly in the electrochemical energy conversion apparatus consists of an even number of stacks 20 greater than two and these stacks 20 are all located in a same row, all these stacks 20 may be electrically connected in series, and only two leads, namely a positive terminal lead and a negative terminal lead, are led out from a same side. Alternatively, these even number of stacks 20 more than two may also be pairwise connected in series or partially connected in series, and multiple leads are led out from a same side. In these cases, the electrochemical energy conversion apparatus still includes two cavities: one first cavity 13 and one second cavity 14.

When the electrochemical energy conversion apparatus includes two or more rows of stack assemblies, there are at least three cavities, and an intermediate cavity is formed between two adjacent rows of stack assemblies. The intermediate cavity may also serve as the first cavity 13 for entry of the first fluid or the second cavity 14 for discharge of the first fluid.

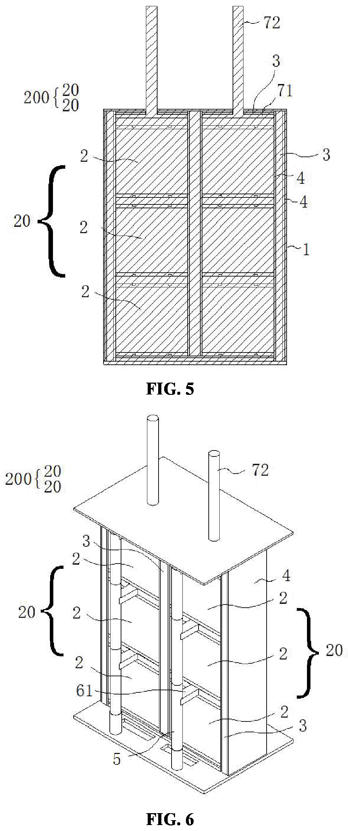

Optionally, as shown in FIG. 5, in the embodiment, the electrochemical energy conversion apparatus further includes a current-collecting assembly. The current-collecting assembly includes a conductive part 71 and an electrical connection part 72. The conductive part 71 can be designed as the above conductive plate, and can be disposed between the insulating component 3 and the stack assembly 200 and electrically connected to the stack assembly 200. The electrical connection part 72 passes through the temperature equalization housing 1 and the insulating component 3, and is connected to the conductive part 71. The electrochemical energy conversion apparatus provided by the present disclosure includes at least two stacks, which offers not only a compact structure and high internal space utilization, but also improves the overall power generation efficiency of the electrochemical energy conversion apparatus. Moreover, every two adjacent stacks can achieve electrical conduction via the conductive plate, which facilitates extraction of electrical energy generated by the electrochemical energy conversion apparatus in the same direction and makes the overall layout more reasonable.

Referring to FIG. 4 and FIG. 5, the insulating component 3 is disposed between the stack assembly 200 and the temperature equalization housing 1, and is made of one or more insulating materials selected from the group consisting of ceramic, glass, rubber, and mica. The electrochemical energy conversion apparatus generates a high voltage and a high current during operation. The insulating component 3 disposed between the temperature equalization housing 1 and the stack assembly 200 can prevent safety accidents caused by electrical leakage from the stack assembly 200. Since a top surface, a bottom surface, and a side surface close to the temperature equalization housing 1 of at least one stack assembly 200 are relatively close to the temperature equalization housing 1, the insulating component 3 covering the top surface, the bottom surface, and/or the side surface of the stack assembly 200 can prevent the safety accidents caused by the electrical leakage and the like.

To achieve a better temperature equalization effect, optionally, in the embodiment, a thermal conductivity of the insulating component 3 is 1-30 W/(m·K). If the thermal conductivity of the insulating component 3 is less than 1 W/(m·K), heat from the side surface, the bottom surface, and/or the top surface of the stack assembly 200 cannot be promptly transferred from the stack assembly 200, resulting in rose local temperature on the side surface, bottom surface, and/or top surface of the stack assembly 200 and increasing the risk of stack failure. If the thermal conductivity of the insulating component 3 is greater than 30 W(/m·K), since the side surface of the stack assembly is relatively close to a short side of the temperature equalization housing 1, the rate of heat transfer is relatively high. Experiments have shown that this will cause thermal expansion deformation on the short side of the temperature equalization housing 1.

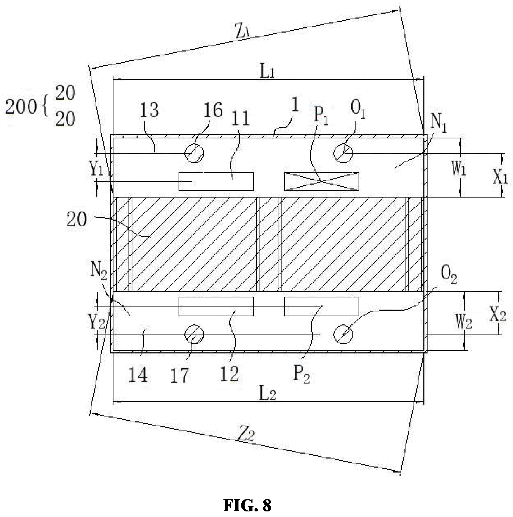

Referring to FIG. 8, the stack assembly 200 including two stacks 20 and the insulating component 3 together divide the accommodation cavity into the first cavity 13 and the second cavity 14. The first cavity 13 is in communication with the first fluid inlet 11. The second cavity 14 is in communication with the first fluid outlet 12. The first cavity 13 is in communication with the second cavity 14 via the first fluid channel. Certainly, it is also possible that two rows of stack assemblies and corresponding insulating components 3 divide the accommodation cavity into three cavities, or that multiple rows of stack assemblies and corresponding insulating components 3 divide the accommodation cavity into multiple cavities.

Based on the above structure, the temperature equalization housing 1, the stack assembly 200, and the insulating component 3 cooperate with one another to form the first cavity 13 and the second cavity 14 within the temperature equalization housing 1. The first fluid required for the electrochemical energy conversion reaction enters the first cavity 13 through the first fluid inlet 11, flows into the first fluid channels of the stacks 20, and then enters each single cell in the stacks 20 for reaction. Cathode tail gas during the reaction flows into the second cavity 14 through the first fluid channels of the stacks 20, and is then discharged through the first fluid outlet 12. When multiple rows of stack assemblies divide the accommodation cavity into multiple cavities including an intermediate cavity, the first fluid may pass through the intermediate cavity before entering the second cavity 14. That is, the first fluid required for the electrochemical energy conversion reaction does not need to be supplied and discharged through a first fluid pipe, such that the overall structure of the electrochemical energy conversion apparatus is simplified, and the stacks 20 are maintained, disassembled, and assembled more conveniently. Besides, the temperature equalization housing 1 seals the entire electrochemical energy conversion apparatus, creating a desirable sealed environment to prevent leakage of the first fluid or the second fluid. A temperature of the first fluid discharged from the stacks 20 is higher than a temperature of the supplied first fluid. Due to the temperature equalization housing 1, the discharged first fluid can fully contact a main body of the temperature equalization housing 1, and conduct heat to the first cavity 13 through the main body, thereby achieving a desirable temperature equalization effect on the first fluid in the electrochemical energy conversion apparatus. This ensures that the temperature of the first fluid entering the temperature equalization housing 1 is close to or the same as the temperature of the first fluid discharged from the temperature equalization housing 1 after the reaction, thereby reducing the temperature difference between the first cavity 13 and the second cavity 14, and inhibiting the stack performance degradation and damage to the stacks caused by local thermal expansion.

Optionally, as shown in FIG. 8, in the embodiment, the temperature equalization housing includes multiple wall surfaces enclosing the accommodation cavity. An area of a wall surface provided with the first fluid inlet 11 is denoted as B, a cross-sectional area of the first fluid inlet 11 is denoted as A, and A/B=0.01-0.95. If A/B is less than 0.01, the first fluid enters the electrochemical energy conversion apparatus at a high flow velocity, the first fluid will be preferentially supplied to the stack unit 2 away from the first fluid inlet 11 and the intake volume of the first fluid for the stack unit 2 close to the first fluid inlet 11 will decrease. This affects the uniformity of distribution of the first fluid in the electrochemical energy conversion apparatus, and in severe cases, this will also cause the overutilization of the first fluid in the stack unit close to the first fluid inlet 11, damaging the stack unit. If A/B is greater than 0.95, the electrochemical energy conversion apparatus and the system platform are sealed more difficultly.

Optionally, as shown in FIG. 3, in the embodiment, the cross-sectional shape of the first fluid inlet 11 may be any regular shape, such as a rectangle, circle, triangle, parallelogram, or regular polygon, or any irregular shape. A circular cross-section is preferred. The cross-sectional shape of the first fluid inlet 11 influences the velocity of the first fluid entering the temperature equalization housing 1. To reduce pressure loss, the first fluid inlet 11 with a circular cross-section is preferably adopted.

Optionally, in the embodiment, a distance between a bottom surface of the stack assembly 200 and an inner bottom surface of the temperature equalization housing 1 is denoted as C, a distance between a top surface of the stack assembly 200 and an inner top surface of the temperature equalization housing 1 is denoted as D, a distance between a side surface of the stack assembly 200 and a corresponding inner side surface of the temperature equalization housing 1 is denoted as E, a thickness of the insulating component 3 is denoted as F, and C/F=1-4, D/F=1-4, E/F=1-2. Taking the C/F as an example (the same reasoning is applied to others), if C/F is less than 1, the thickness of the insulating component 3 is relatively large, which increases the usage cost of the insulating material, reduces the economic effectiveness, and affects the assembly of other components with the stack assembly 200. If C/F is greater than 4, the thickness of the insulating component 3 is relatively small. During high-temperature operation of the electrochemical energy conversion apparatus, impurity ions in the insulating material may gradually migrate to two ends under the action of an electric field, and the insulation performance decreases with the increase of operating time. In severe cases, insulation failure may occur, leading to a breakdown phenomenon between the stack assembly 200 and the temperature equalization housing 1. When the temperature equalization housing is a rectangular cuboid, the side surface of the stack assembly 200 is a side surface of the stack assembly 200 close to the short side of the temperature equalization housing 1, and there are only the insulating component and some insulating fillings between the side surface of the stack assembly 200 close to the short side of the temperature equalization housing and the corresponding inner side surface of the temperature equalization housing 1, the ratio may range from 1 to 2. Some other components such as an electrical connection plate, a current collector plate, and a gas guiding assembly are further provided between each of the top surface and the bottom surface of the stack assembly and the temperature equalization housing, so the C/F ratio has a relatively wide range, and ranges from 1 to 4.

Optionally, as shown in FIG. 5, in the embodiment, the electrochemical energy conversion apparatus further includes sealing gasket 4. The sealing gasket 4 is disposed between the insulating component 3 and the temperature equalization housing 1. The sealing gasket 4 disposed the insulating component 3 and the temperature equalization housing 1 can enhance the overall sealing of the electrochemical energy conversion apparatus to prevent leakage of the first fluid and the second fluid, and can further fill a gap between the insulating component 3 and the temperature equalization housing 1 to prevent shaking and shifting of the insulating component 3 and provide a certain cushioning effect for the stack assembly 200 in the electrochemical energy conversion apparatus.

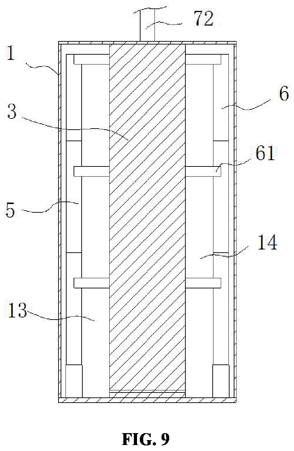

Optionally, as shown in FIG. 3 and FIG. 9, in the embodiment, the temperature equalization housing 1 is provided with a second fluid inlet 16 and a second fluid outlet 17. The electrochemical energy conversion apparatus further includes a second fluid inlet pipe 5 and a second fluid outlet pipe 6. The second fluid inlet pipe 5 is disposed in the first cavity 13. The second fluid inlet pipe 5 is in communication with the temperature equalization housing 1 through the second fluid inlet 16. The second fluid inlet pipe 5 is connected to the stacks 20. The second fluid outlet pipe 6 is disposed in the second cavity 14. The second fluid outlet pipe 6 is connected to the temperature equalization housing 1 through the second fluid outlet 17. The second fluid outlet pipe 6 is connected to the stacks 20. The second fluid inlet pipe 5 and the second fluid outlet pipe 6 each include a body and multiple branches. The body is in communication with the temperature equalization housing through the second fluid inlet 16/the second fluid outlet 17, and is connected to second fluid channels of the stack units 2 through the branches. The second fluid enters the branches connected to the body of the second fluid inlet pipe 5 through the body of the second fluid inlet pipe 5, and then is delivered to each stack unit 2 in the stacks 20 through the branches of the second fluid inlet pipe 5. After participating in the reaction in the electrochemical energy conversion apparatus, the second fluid flows into the body of the second fluid outlet pipe 6 through the branches of the second fluid outlet pipe 6, and then flows out of the electrochemical energy conversion apparatus. Preferably, the second fluid inlet pipe 5 and the second fluid outlet pipe 6 are each provided with an insulating segment. With the insulating segments on the second fluid inlet pipe 5 and the second fluid outlet pipe 6, the second fluid inlet pipe 5 and the second fluid outlet pipe 6 are entirely insulated, greatly enhancing the safety performance of the power generation system of the electrochemical energy conversion apparatus.

Optionally, as shown in FIG. 6, in the embodiment, the branches of the second fluid inlet pipe 5 and the second fluid outlet pipe 6 are each provided with a fluid equalization device 61. A second fluid outlet channel and a second fluid inlet channel are disposed in the fluid equalization device 61. The stack unit bottom plate 23 or the stack unit top plate 21 is provided with a stack unit second fluid inlet and a stack unit second fluid outlet. The second fluid outlet channel communicates with the stack unit second fluid inlet. The second fluid inlet channel communicates with the stack unit second fluid outlet. Preferably, an end of the fluid equalization device 61 away from the second fluid outlet channel or the second fluid inlet channel is sealed. Upon this, the second fluid enters the fluid equalization devices 61 through the body of the second fluid inlet pipe 5, and enters the stack unit second fluid inlet on the stack unit top plate 21 or the stack unit bottom plate 23 through the second fluid outlet channel of the fluid equalization device 61, thereby entering the stack units to participate in the electrochemical energy conversion reaction. A second fluid exhaust gas after the reaction enters the second fluid inlet channel of the fluid equalization device 61 through the stack unit second fluid outlet on the stack unit top plate 21 or the stack unit bottom plate 23, and enters the body of the second fluid outlet pipe 6 through the second fluid inlet channel. The design in which the fluid equalization device 61 includes one end provided with the second fluid inlet/outlet channel and the other end completely sealed can ensure that an amount of the second fluid delivered to each stack unit through the fluid equalization device 61 is uniform, and thus the amount of the second fluid entering each single cell varies only minimally, thereby improving the utilization rate of the second fluid.

Optionally, as shown in FIG. 8, the embodiment includes the following implementations:
(1) The temperature equalization housing 1 includes the end surface 15, the second fluid inlet 16 is formed on the end surface 15; a projection plane of the first cavity 13 onto the end surface 15 is denoted as N₁, a long side of the projection plane N₁ is denoted as L₁, a short side of the projection plane N₁ is denoted as W₁, a projection point of an axis of the second fluid inlet pipe 5 onto the end surface 15 is denoted as O_{1,} a distance between the projection point O₁ and the long side L₁ of the projection plane N₁ close to the stack assembly is denoted as X₁, and 0.1W₁≤X₁≤0.9W₁;
(2) The temperature equalization housing 1 includes the end surface 15, the second fluid outlet 17 is formed on the end surface 15; a projection plane of the second cavity 14 onto the end surface 15 is denoted as N₂, a long side of the projection plane N₂ is denoted as L₂, a short side of the projection plane N₂ is denoted as W₂, a projection point of an axis of the second fluid outlet pipe 6 onto the end surface 15 is denoted as O₂, a distance between the projection point O₂ and the long side L₂ of the projection plane N₂ close to the stack assembly is denoted as X₂, and 0.1W₂≤X₂≤0.9W₂; and
(3) The temperature equalization housing 1 includes the end surface 15, the second fluid inlet 16 and the second fluid outlet 17 are formed on the end surface 15; a projection plane of the first cavity 13 onto the end surface 15 is denoted as N₁, a long side of the projection plane N₁ is denoted as L₁, a short side of the projection plane N₁ is denoted as W₁, a projection point of an axis of the second fluid inlet pipe 5 onto the end surface 15 is denoted as O₁, a distance between the projection point O₁ and the long side L₁ is denoted as X₁, and 0.1W₁≤X₁≤0.9W₁; and a projection plane of the second cavity 14 onto the end surface 15 is denoted as N₂, a long side of the projection plane N₂ is denoted as L₂, a short side of the projection plane N₂ is denoted as W₂, a projection point of an axis of the second fluid outlet pipe 6 onto the end surface 15 is denoted as O₂, a distance between the projection point O₂ and the long side L₂ is denoted as X₂, and 0.1W₂≤X₂≤0.9W₂.

Since the second fluid inlet pipe 5 and the second fluid outlet pipe 6 are electrically connected to the stack 20 through the fluid equalization devices 61, and the side surfaces of the stack 20 facing the first cavity and the second cavity are not covered with the insulating component 3 . When the X₁ is less than the 0.1W or greater than the 0.9W, the first fluid inlet pipe 5 is too close to the side surface of the stack facing the first cavity 13 or to the inner side surface of the temperature equalization housing facing the first cavity 13, and is therefore prone to a short circuit caused by electrical breakdown. When the X₂ is less than the 0.1W or greater than the 0.9W, the second fluid outlet pipe 6 is too close to the side surface of the stack facing the second cavity 14 or to the inner side surface of the temperature equalization housing facing the second cavity 14, and is therefore prone to a short circuit caused by electrical breakdown.

Optionally, as shown in FIG. 8, in the embodiment, the temperature equalization housing includes the end surface. A projection plane of the first cavity onto the end surface is denoted as N₁, a short side of the projection plane N₁ is denoted as W₁, a length of a longest diagonal of the projection plane N₁ is denoted as Z₁, a projection point of an axis of the second fluid inlet pipe onto the end surface is denoted as O₁, a projection point of a center point of the first fluid inlet onto the end surface is denoted as P₁, a distance between the projection point P₁ and the projection point O₁ is denoted as Y₁, and 0.1W₁≤Y₁≤0.85Z₁;
and/or,
the temperature equalization housing includes the end surface; a projection plane of the second cavity onto the end surface is denoted as N₂, a short side of the projection plane N₂ is denoted as W₂, a length of a longest diagonal of the projection plane N₂ is denoted as Z₂, a projection point of an axis of the second fluid outlet pipe onto the end surface is denoted as O₂, a projection point of a center point of the first fluid outlet onto the end surface is denoted as P₂, a distance between the projection point P₂ and the projection point O₂ is denoted as Y₂, and 0.1W₂≤Y₂≤0.85Z₂.

In the present disclosure, the first fluid wraps the second fluid inlet pipe 5 when it enters the stack 20 through the first fluid inlet 11 and the first cavity 13. The first fluid discharged from the stack 20 wraps the second fluid outlet pipe 6 when it flows to the first fluid outlet 12 through the second cavity 14. Therefore, a temperature difference between the first fluid and the second fluid upon entering and exiting the stack 20 can be greatly reduced. The Y₁ is equal to the 0.1W₁, i.e., there is a theoretically minimum distance between a center of the first fluid inlet 11 and a center of the second fluid inlet pipe 5. The Y₂ is equal to the 0.1W₂, i.e., there is a theoretically minimum distance between a center of the first fluid outlet and a center of the second fluid outlet pipe 6. If the Y₁ is less than the 0.1W₁, the second fluid inlet pipe 5 is too close to the temperature equalization housing 1, and thus safety accidents such as electrical leakage caused by electrical breakdown may easily occur. If the Y₁ is greater than the 0.85Z₁, a distance between the second fluid inlet pipe 5 and the first fluid inlet 11 is relatively large, causing a poor temperature equalization effect between the first fluid and the second fluid and easily leading to local thermal expansion. If the Y₂ is less than the 0.1W₂, the second fluid outlet pipe 6 is too close to the temperature equalization housing 1, and thus safety accidents such as electrical leakage caused by electrical breakdown may easily occur. If the Y₂ is greater than 0.85Z₂, a distance between the second fluid outlet pipe 6 and the first fluid outlet 12 is relatively large, causing a poor temperature equalization effect between the first fluid and the second fluid and easily leading to local thermal expansion.

Optionally, in the embodiment, the electrochemical energy conversion apparatus further includes a mounting frame and a heat preservation component. In an electrochemical energy conversion system, multiple electrochemical energy conversion apparatuses are connected in series to realize higher power generation efficiency. Since a relatively high temperature is required when the electrochemical energy conversion apparatus operates, the heat preservation component is disposed outside the electrochemical energy conversion apparatuses for thermal insulation, and the mounting frame is assembled outside the heat preservation portion to secure an overall structure formed by the multiple electrochemical energy conversion apparatuses and the heat preservation component. This arrangement can ensure that each electrochemical energy conversion apparatus in the electrochemical energy conversion system can maintain an independent temperature environment, and the stacks in the electrochemical energy conversion apparatus have desirable temperature uniformity, thereby improving the service life and reliability of the electrochemical energy conversion system.

The embodiment of the present disclosure further provides a power generation apparatus. The power generation apparatus includes the above electrochemical energy conversion apparatus. With the electrochemical energy conversion apparatus, the power generation apparatus features high internal space utilization, a long service life, and slow stack performance degradation, and facilitates maintenance and replacement of a faulty stack.

To sum up, the electrochemical energy conversion apparatus provided by the embodiment of the present disclosure mainly includes the temperature equalization housing 1, the stack assembly 200, and the insulating component 3. Compared with the prior art, the present disclosure has the following advantages:
1. The first fluid required for the reaction in the electrochemical energy conversion apparatus does not need to be supplied and discharged through the first fluid pipe, such that the overall structure of the electrochemical energy conversion apparatus is simplified, and the stack is maintained, disassembled and assembled more conveniently.
2. The temperature equalization housing seals the entire electrochemical energy conversion apparatus, creating a desirable sealed environment to prevent leakage of the first fluid or the second fluid. A temperature of the first fluid discharged from the stack is higher than a temperature of the supplied first fluid. Due to the temperature equalization housing, the discharged first fluid can fully contact a main body of the temperature equalization housing, and conduct heat to the first cavity through the main body, thereby achieving a desirable temperature equalization effect on the first fluid in the electrochemical energy conversion apparatus. This ensures that the temperature of the first fluid entering the temperature equalization housing is close to or the same as the temperature of the first fluid discharged from the temperature equalization housing after the reaction, thereby reducing the temperature difference between the first cavity and the second cavity, and inhibiting the stack performance degradation and damage to the stack caused by local thermal expansion.
3. In the electrochemical energy conversion apparatus, a row of stack assemblies each include at least two stacks, which offers not only a compact structure and high internal space utilization, but also improves the overall power generation efficiency of the electrochemical energy conversion apparatus. Moreover, every two adjacent stacks can achieve electrical conduction via the conductive plate, which facilitates extraction of electrical energy generated by the electrochemical energy conversion apparatus in the same direction and makes the overall layout more reasonable.
4. The electrochemical energy conversion apparatus provided by the present disclosure fully utilizes the internal space of the temperature equalization housing, and has the compact and reliable internal component arrangement, achieving the low cost, and improving the utilization rate of the second fluid and the power generation efficiency. Therefore, the electrochemical energy conversion apparatus provided by the present disclosure is suitable for practical production with high practicability, and facilitates standardized production and promotion.

The foregoing are merely descriptions of the preferred embodiments of the present disclosure. It should be noted that several improvements and replacements can be made by those of ordinary skill in the art without departing from the technical principle of the present disclosure, and these improvements and replacements shall also be deemed as falling within the protection scope of the present disclosure.

## Claims

1. An electrochemical energy conversion apparatus, wherein the electrochemical energy conversion apparatus comprises:
a temperature equalization housing, inside which an accommodation cavity is formed, wherein the temperature equalization housing is made of a thermally conductive material, and the temperature equalization housing is provided with a first fluid inlet and a first fluid outlet;
a stack assembly comprising at least one stack and disposed in the accommodation cavity, wherein the at least one stack is provided with a first fluid channel; and
an insulating component disposed between the stack assembly and the temperature equalization housing,
wherein the stack assembly and the insulating component together divide the accommodation cavity into a plurality of cavities, the plurality of cavities comprise a first cavity and a second cavity, the first cavity is in communication with the first fluid inlet, the second cavity is in communication with the first fluid outlet, and the first cavity is in communication with the second cavity via the first fluid channel.

2. The electrochemical energy conversion apparatus according to claim 1, wherein a thermal conductivity of the temperature equalization housing is 1-40 W/(m·K).

3. The electrochemical energy conversion apparatus according to claim 1, wherein a thermal conductivity of the insulating component is 1-30 W/(m·K).

4. The electrochemical energy conversion apparatus according to claim 1, wherein the temperature equalization housing comprises a plurality of wall surfaces enclosing the accommodation cavity, and an area of a wall surface provided with the first fluid inlet is denoted as B, an area of the first fluid inlet is denoted as A, and A/B=0.01-0.95.

5. The electrochemical energy conversion apparatus according to claim 1, wherein a distance between a bottom surface of the stack assembly and an inner bottom surface of the temperature equalization housing is denoted as C, a distance between a top surface of the stack assembly and an inner top surface of the temperature equalization housing is denoted as D, a distance between a side surface of the stack assembly and a corresponding inner side surface of the temperature equalization housing is denoted as E, a thickness of the insulating component is denoted as F, and C/F=1-4, D/F=1-4, E/F=1-2.

6. The electrochemical energy conversion apparatus according to claim 1, wherein the temperature equalization housing is provided with a second fluid inlet and a second fluid outlet;
the electrochemical energy conversion apparatus further comprises a second fluid inlet pipe and a second fluid outlet pipe;
the second fluid inlet pipe is disposed in the first cavity, the second fluid inlet pipe is in communication with the temperature equalization housing through the second fluid inlet, and the second fluid inlet pipe is connected to the stack assembly; and
the second fluid outlet pipe is disposed in the second cavity, the second fluid outlet pipe is connected to the temperature equalization housing through the second fluid outlet, and the second fluid outlet pipe is connected to the stack assembly.

7. The electrochemical energy conversion apparatus according to claim 6, wherein the temperature equalization housing comprises an end surface, a projection plane of the first cavity onto the end surface is denoted as N₁, a long side of the projection plane N₁ is denoted as L₁, a short side of the projection plane N₁ is denoted as W₁, a projection point of an axis of the second fluid inlet pipe onto the end surface is denoted as O₁, a distance between the projection point O₁ and the long side L₁ of the projection plane N₁ close to the stack assembly is denoted as X₁, and 0.1W₁ ≤ X₁ ≤ 0.9W₁;
and/or,
the temperature equalization housing comprises the end surface, a projection plane of the second cavity onto the end surface is denoted as N₂, a long side of the projection plane N₂ is denoted as L₂, a short side of the projection plane N₂ is denoted as W₂, a projection point of an axis of the second fluid outlet pipe onto the end surface is denoted as O₂, a distance between the projection point O₂ and the long side L₂ of the projection plane N₂ close to the stack assembly is denoted as X₂, and 0.1W₂ ≤ X₂ ≤ 0.9W₂.

8. The electrochemical energy conversion apparatus according to claim 6, wherein the temperature equalization housing comprises an end surface, a projection plane of the first cavity onto the end surface is denoted as N₁, a short side of the projection plane N₁ is denoted as W₁, a length of a longest diagonal of the projection plane N₁ is denoted as Z₁, a projection point of an axis of the second fluid inlet pipe onto the end surface is denoted as O₁, a projection point of a center point of the first fluid inlet onto the end surface is denoted as P₁, a distance between the projection point P₁ and the projection point O₁ is denoted as Y₁, and 0.1W₁≤Y₁≤0.85Z₁;
and/or,
the temperature equalization housing comprises the end surface, a projection plane of the second cavity onto the end surface is denoted as N₂, a short side of the projection plane N₂ is denoted as W₂, a length of a longest diagonal of the projection plane N₂ is denoted as Z₂, a projection point of an axis of the second fluid outlet pipe onto the end surface is denoted as O₂, a projection point of a center point of the first fluid outlet onto the end surface is denoted as P₂, a distance between the projection point P₂ and the projection point O₂ is denoted as Y₂, and 0.1W₂≤Y₂≤0.85Z₂.

9. The electrochemical energy conversion apparatus according to claim 1, wherein the stack assembly comprises a plurality of stacks, at least two adjacent stacks are connected in series, positive and negative terminals of the two adjacent stacks that are connected in series are arranged in opposite directions, and the insulating component is disposed between the two adjacent stacks.

10. The electrochemical energy conversion apparatus according to claim 1, wherein the electrochemical energy conversion apparatus further comprises a current-collecting assembly, the current-collecting assembly comprises a conductive part and an electrical connection part, the conductive part is disposed between the insulating component and the stack assembly and electrically connected to the stack assembly, and the electrical connection part passes through the temperature equalization housing and the insulating component and is connected to the conductive part.
